# EUROPEAN PATENT SPECIFICATION

(11) **EP 3 793 016 B1**
(45) Date of publication and mention of the grant of the patent: **01.03.2023**
(21) Application number: 19807348.8
(22) Date of filing: 24.04.2019
(51) Int. Cl.: H01M 10/46, H01M 4/13, H01M 4/78, H01M 10/42, H01M 10/44, H01M 10/48, H01M 10/615, H01M 10/654, H01M 10/657

(54) **BATTERY ELECTRODE SHEET AND PREPARATION METHOD THEREFOR, BATTERY MANAGEMENT METHOD AND RELATED APPARATUS**
BATTERIEELEKTRODENBLATT UND HERSTELLUNGSVERFAHREN DAFÜR, BATTERIEVERWALTUNGSVERFAHREN UND ZUGEHÖRIGE VORRICHTUNG
FEUILLE D'ÉLECTRODE DE BATTERIE ET SON PROCÉDÉ DE PRÉPARATION, PROCÉDÉ DE GESTION DE BATTERIE ET APPAREIL ASSOCIÉ

(30) Priority: 22.05.2018 CN 201810498321
(43) Date of publication of application: 17.03.2021
(73) Proprietor: Huawei Digital Power Technologies Co., Ltd., Shenzhen, Guangdong 518043 (CN)
(72) Inventor: CHENG, Gang, Shenzhen, Guangdong 518129 (CN)
(74) Representative: Körber, Martin Hans
(86) International application number: PCT/CN2019/084104
(87) International publication number: WO 2019/223488

(56) References cited:
- CN-A- 102 170 035
- CN-A- 102 544 615
- CN-A- 106 130 117
- CN-A- 108 832 074
- CN-U- 204 067 495
- US-A1- 2010 203 372
- US-A1- 2017 207 495

## Description

### TECHNICAL FIELD

The present invention relates to the field of secondary battery technologies, and in particular, to a battery electrode plate, a preparation method thereof, a wireless rechargeable battery, a battery management method and system, and a controller.

### BACKGROUND

A wireless rechargeable battery is a rechargeable battery using a wireless charging technology such as an electromagnetic induction charging technology. A principle of the electromagnetic induction charging technology is as follows: A coil is disposed at each of a transmit end and a receive end. The coil at the transmit end is connected to a wired power supply, and generates electromagnetic energy through an electromagnetic phenomenon. The coil at the receive end induces the electromagnetic energy generated by the transmit end, and charges a rechargeable battery by using a current generated through electromagnetic induction.

For example, the rechargeable battery is a lithium-ion battery. Due to an inherent attribute of the lithium-ion battery, when used at a low temperature, the lithium-ion battery presents relatively high polarization during charging and discharging because dynamics performance of positive and negative electrodes decreases. Forcible charging may cause lithium separation, and even penetrate a separator film, leading to a short circuit between the positive and negative electrodes and further causing outbreak of a fire, explosion, and the like to the battery. In addition, the battery can be hardly discharged at a relatively high current at a low temperature, affecting an output power of the lithium-ion battery.

In the prior art, a coil inducing energy of a magnetic field is generally disposed outside a housing of a wireless rechargeable battery or disposed between the housing and an electrode plate of the wireless rechargeable battery, and a heating piece of the rechargeable battery is disposed between a positive electrode and a negative electrode of the rechargeable battery, greatly increasing thickness of the wireless rechargeable battery. US 2017/207495 A1 discloses a secondary battery including at least one first metal plate serving as a positive terminal, at least one second metal plate serving as a negative terminal, and a separator material disposed between the at least one first metal plate and the at least one second metal plate for separating a positive terminal material layer coated on the at least one first metal plate and a negative terminal material layer coated on the at least one second metal plate.

### SUMMARY

A technical problem to be resolved by embodiments of the present invention is to provide a battery electrode plate, a preparation method thereof, a wireless rechargeable battery, a battery management method and system, and a controller. An induction coil is disposed inside a battery electrode plate, so that the induction coil can implement wireless charging, heat a wireless rechargeable battery in which the battery electrode plate is located, and greatly reduce thickness of the wireless rechargeable battery.

According to a first aspect, an embodiment of the present invention provides a battery electrode plate, including: a current collector and an induction coil. The induction coil is a planar coil formed by winding a first conducting wire wrapped by an insulation film, at least a part of the induction coil is embedded in the current collector, a first surface of the induction coil is exposed on a second surface of the current collector, and the first surface is a surface that is of the induction coil and that is parallel to a plane where the induction coil is located.

Compared with the prior art, in this embodiment of the present invention, the induction coil is disposed inside the battery electrode plate, and the first surface that is of the induction coil and that is used to implement wireless charging is exposed on the surface of the current collector, so that the induction coil can implement wireless charging, heat a wireless rechargeable battery in which the battery electrode plate is located, and greatly reduce thickness of the wireless rechargeable battery.

With reference to the first aspect, in a first implementation of the first aspect, the induction coil is configured to receive external electromagnetic energy, to generate an induced electromotive force to charge the wireless rechargeable battery in which the battery electrode plate is located.

With reference to the first aspect, in a second implementation of the first aspect, the induction coil is further configured to heat an electrode plate of the wireless rechargeable battery when a current is supplied to the induction coil.

With reference to any one of the first aspect and the first and the second implementations of the first aspect, in a third implementation of the first aspect, the induction coil is a planar helical coil, to increase a received power of the induction coil, and evenly heat the battery electrode plate.

With reference to the third implementation of the first aspect, in a fourth implementation of the first aspect, the current collector is a planar helical coil formed by helically winding a second conducting wire on a plane, and the first conducting wire and the second conducting wire are wound in parallel on a same plane.

With reference to any one of the first aspect and the first to the third implementations of the first aspect, in a fifth implementation of the first aspect, the current collector includes a gap extending through the second surface and a third surface, the induction coil is embedded in the gap, and the third surface is a surface that is of the current collector and that is opposite to the second surface.

With reference to any one of the first aspect and the first to the fifth implementations of the first aspect, in a sixth implementation of the first aspect, the battery electrode plate is a positive electrode plate, and the battery electrode plate further includes a positive electrode active substance, a first conductive agent, and a first bonding agent that are coated on the third surface of the current collector; or the battery electrode plate is a negative electrode plate, and the battery electrode plate further includes a negative electrode active substance, a second conductive agent, and a second bonding agent that are coated on the third surface of the current collector; and
the third surface is a surface that is of the current collector and that is opposite to the second surface.

According to a second aspect, an embodiment of the present invention further provides a preparation method for a battery electrode plate, including:
embedding at least a part of an induction coil in a current collector, where the induction coil is a planar coil formed by winding a first conducting wire wrapped by an insulation film, a first surface of the induction coil is exposed on a second surface of the current collector, and the first surface is a surface that is of the induction coil and that is parallel to a plane where the induction coil is located; and
coating active slurry on a third surface of the current collector, to form the battery electrode plate, where the third surface is a surface that is of the current collector and that is opposite to the first surface.

Compared with the prior art, in the battery electrode plate prepared in this embodiment of the present invention, the induction coil is disposed inside the battery electrode plate, and the first surface that is of the induction coil and that is used to implement wireless charging is exposed on the surface of the current collector, so that the induction coil can implement wireless charging, heat a wireless rechargeable battery in which the battery electrode plate is located, and greatly reduce thickness of the wireless rechargeable battery.

With reference to the second aspect, in a first implementation of the second aspect, an implementation of embedding at least a part of an induction coil in a current collector may be: helically winding the first conducting wire and a second conducting wire in parallel on a same plane, to form a first planar helical coil and a second planar helical coil, where the first planar helical coil is an induction coil, and the second planar helical coil is a current collector.

With reference to the second aspect, in a second implementation of the second aspect, another implementation of embedding at least a part of an induction coil in a current collector may be: forming a gap extending through the second surface and the third surface on the current collector, where the second surface and the third surface are two opposite surfaces of the current collector; and
embedding the induction coil in the gap, so that the first surface of the induction coil is exposed on the second surface of the current collector.

According to a third aspect, an embodiment of the present invention further provides a wireless rechargeable battery, including a positive electrode plate, a negative electrode plate, and a separator film and an electrolyte that are disposed between the positive electrode plate and the negative electrode plate, where the positive electrode plate or the negative electrode plate is the battery electrode plate described in any one of the first aspect and the first to the fifth implementations of the first aspect.

According to a fourth aspect, an embodiment of the present invention further provides a battery management method, including:
inputting, by a controller to a wireless rechargeable battery if a charging signal is received, an induced electromotive force that is generated by an induction coil based on received external electromagnetic energy, to charge the wireless rechargeable battery, where the induction coil is disposed inside the wireless rechargeable battery; and controlling, if a first temperature obtained by a temperature sensor is less than a first temperature threshold in a discharging process of the wireless rechargeable battery, the wireless rechargeable battery to output a current to the induction coil, to heat the wireless rechargeable battery.

Compared with the prior art, in this embodiment of the present invention, the induction coil of the wireless rechargeable battery may be reused as a heating piece, to not only implement wireless charging, but also heat the wireless rechargeable battery, thereby improving charging and discharging performance of the wireless rechargeable battery at a low temperature.

With reference to the fourth aspect, in a first implementation of the fourth aspect, an implementation of controlling, by the controller if a first temperature obtained by a temperature sensor is less than a first temperature threshold in a discharging process of the wireless rechargeable battery, the wireless rechargeable battery to output a current to the induction coil, to heat the wireless rechargeable battery may be: when the first temperature obtained by the temperature sensor is less than the first temperature threshold and a residual capacity of the rechargeable battery is greater than a preset capacity threshold in the discharging process of the wireless rechargeable battery, the controller may control the wireless rechargeable battery to output the current to the induction coil, to heat the wireless rechargeable battery.

In this embodiment of the present invention, when the currently obtained first temperature is less than the first temperature threshold, discharging performance of the wireless rechargeable battery is poor, and the wireless rechargeable battery can be hardly discharged, leading to a phenomenon such as crash or automatic shutdown of a device. In this case, the wireless rechargeable battery may be connected to the induction coil. To be specific, two ends of the induction coil are connected to a positive electrode and a negative electrode of the wireless rechargeable battery by using a load (for example, a resistor), to form a circuit loop, and generate a current, and the current flows through the induction coil, so that the induction coil generates heat.

With reference to the fourth aspect, in a second implementation of the fourth aspect, an implementation of inputting, by a controller to a wireless rechargeable battery if a charging signal is received, an induced electromotive force that is generated by an induction coil based on received external electromagnetic energy, to charge the wireless rechargeable battery may be: if the charging signal is received, when a second temperature obtained by the temperature sensor is less than a second temperature threshold, the controller conducts the induction coil, to heat, by using the external electromagnetic energy received by the induction coil, the wireless rechargeable battery in which the induction coil is located; and when a third temperature obtained by the temperature sensor is not less than the second temperature threshold, the controller inputs, to the wireless rechargeable battery, the induced electromotive force that is generated by the induction coil based on the received external electromagnetic energy, to charge the wireless rechargeable battery.

In this embodiment of the present invention, when the currently obtained second temperature is less than the second temperature threshold, charging performance of the wireless rechargeable battery is poor, and the wireless rechargeable battery can be hardly charged. In this case, the induction coil may be conducted. To be specific, two ends of the induction coil are connected by using a load (for example, a resistor), to form a circuit loop, and generate a current, and the current flows through the induction coil, so that the induction coil generates heat. When the currently obtained third temperature is not less than the second temperature threshold, the circuit loop between the induction coil and the load is broken, and the two ends of the induction coil are connected to a positive electrode and a negative electrode of the wireless rechargeable battery by using a rectifier and voltage regulator module, to charge the wireless rechargeable battery. In this embodiment of the present invention, charging performance of the wireless rechargeable battery at a low temperature can be improved.

With reference to any one of the fourth aspect and the first and the second implementations of the fourth aspect, in a third implementation of the fourth aspect, the wireless rechargeable battery includes a positive electrode plate, a negative electrode plate, and a separator film and an electrolyte that are disposed between the positive electrode plate and the negative electrode plate, where the positive electrode plate or the negative electrode plate is any battery electrode plate described in any one of the first aspect and the first to the fifth implementations of the first aspect.

According to a fifth aspect, an embodiment of the present invention further provides a controller, including:
a charging unit, configured to input, to a wireless rechargeable battery if a charging signal is received, an induced electromotive force that is generated by an induction coil based on received external electromagnetic energy, to charge the wireless rechargeable battery, where the induction coil is disposed inside the wireless rechargeable battery; and
a discharging unit, configured to: if a first temperature obtained by a temperature sensor is less than a preset temperature threshold in a discharging process of the wireless rechargeable battery, control the wireless rechargeable battery to output a current to the induction coil, to heat the wireless rechargeable battery.

With reference to the fifth aspect, in a first implementation of the fifth aspect, the discharging unit is specifically configured to:
when the first temperature obtained by the temperature sensor is less than a first temperature threshold and a residual capacity of the rechargeable battery is greater than a preset capacity threshold in the discharging process of the wireless rechargeable battery, control the wireless rechargeable battery to output a current to the induction coil, to heat the wireless rechargeable battery.

With reference to the fifth aspect, in a second implementation of the fifth aspect, the charging unit is specifically configured to:
if the charging signal is received, when a second temperature obtained by the temperature sensor is less than a second temperature threshold, conduct the induction coil, to heat, by using the external electromagnetic energy received by the induction coil, the wireless rechargeable battery in which the induction coil is located; and
when a third temperature obtained by the temperature sensor is not less than the second temperature threshold, input, to the wireless rechargeable battery, the induced electromotive force that is generated by the induction coil based on the received external electromagnetic energy, to charge the wireless rechargeable battery.

With reference to any one of the fifth aspect and the first and the second implementations of the fifth aspect, in a third implementation of the fifth aspect, the wireless rechargeable battery includes a positive electrode plate, a negative electrode plate, and a separator film and an electrolyte that are disposed between the positive electrode plate and the negative electrode plate, where the positive electrode plate or the negative electrode plate is the battery electrode plate described in any one of the first aspect and the first to the fifth implementations of the first aspect.

According to a sixth aspect, an embodiment of the present invention further provides a controller, including a processor and a memory. The processor is coupled to the memory, and invokes data and an instruction that are stored in the memory, to perform the battery management method described in the fourth aspect.

According to a seventh aspect, an embodiment of the present invention further provides a battery management system, including a wireless rechargeable battery, a temperature sensor, and a controller, where the wireless rechargeable battery includes an induction coil disposed inside the wireless rechargeable battery.

The induction coil is configured to receive external electromagnetic energy, to generate an induced electromotive force.

The wireless rechargeable battery is configured to supply power to an external circuit, and store electric energy.

The controller is configured to: if a charging signal is received, input the induced electromotive force to the wireless rechargeable battery, to charge the wireless rechargeable battery; and if a first temperature obtained by the temperature sensor is less than a first temperature threshold in a discharging process of the wireless rechargeable battery, control the wireless rechargeable battery to output a current to the induction coil, to heat the wireless rechargeable battery.

With reference to the seventh aspect, in a first implementation of the seventh aspect, the battery management system further includes a rectifier and voltage regulator module. The rectifier and voltage regulator module is connected to the induction coil, and is configured to perform rectification and/or voltage regulation on the induced electromotive force, and input the processed induced electromotive force to the wireless rechargeable battery, to charge the wireless rechargeable battery.

With reference to the seventh aspect, in a second implementation of the seventh aspect, when the controller is configured to, if the first temperature is less than the first temperature threshold in the discharging process of the wireless rechargeable battery, control the wireless rechargeable battery to output a current to the induction coil, to heat the wireless rechargeable battery, the controller is specifically configured to:
when the first temperature is less than the first temperature threshold and a residual capacity of the rechargeable battery is greater than a preset capacity threshold in the discharging process of the wireless rechargeable battery, control the wireless rechargeable battery to output a current to the induction coil, to heat the wireless rechargeable battery.

With reference to the seventh aspect, in a third implementation of the seventh aspect, when the controller is configured to, if the charging signal is received, input the induced electromotive force to the wireless rechargeable battery, to charge the wireless rechargeable battery, the controller is specifically configured to:
if the charging signal is received, when a second temperature obtained by the temperature sensor is less than a second temperature threshold, conduct the induction coil, to heat the wireless rechargeable battery by using the external electromagnetic energy received by the induction coil; and
when a third temperature obtained by the temperature sensor is not less than the second temperature threshold, input the induced electromotive force to the wireless rechargeable battery, to charge the wireless rechargeable battery.

With reference to any one of the seventh aspect or the first to the third implementations of the seventh aspect, in a fourth implementation of the seventh aspect, the wireless rechargeable battery includes a positive electrode plate, a negative electrode plate, and a separator film and an electrolyte that are disposed between the positive electrode plate and the negative electrode plate, where the positive electrode plate or the negative electrode plate is the battery electrode plate described in any one of the first aspect and the first to the fifth implementations of the first aspect.

### BRIEF DESCRIPTION OF DRAWINGS

To describe the technical solutions in the embodiments of the present invention or in the background more clearly, the following briefly describes the accompanying drawings required for describing the embodiments of the present invention or the background.
FIG. 1 is a schematic diagram of a structure of a battery electrode plate according to an embodiment of the present invention;
FIG. 2 is a sectional view of a part of a battery electrode plate according to an embodiment of the present invention;
FIG. 3 is a sectional view of a part of another battery electrode plate according to an embodiment of the present invention;
FIG. 4 is a schematic diagram of a structure of another wireless rechargeable battery according to an embodiment of the present invention;
FIG. 5 is a sectional view of a part of still another battery electrode plate according to an embodiment of the present invention;
FIG. 6 is a schematic flowchart of a preparation method for a battery electrode plate according to an embodiment of the present invention;
FIG. 7 is a schematic diagram of a structure of a wireless rechargeable battery according to an embodiment of the present invention;
FIG. 8 is a schematic diagram of an architecture of a battery management system according to an embodiment of the present invention;
FIG. 9 is a schematic flowchart of a battery management method according to an embodiment of the present invention;
FIG. 10 is a schematic diagram of a structure of a controller according to an embodiment of the present invention; and
FIG. 11 is a schematic diagram of a structure of another controller according to an embodiment of the present invention.

### DESCRIPTION OF EMBODIMENTS

The following briefly describes related concepts used in the embodiments of the present invention.

A rechargeable battery, also referred to as a secondary battery, is a battery that can be used again after an active substance is activated through charging after the battery is discharged. The secondary battery may be a lithium-ion battery, a nickel-cadmium battery, a nickel-metal hydride battery, a lead-acid battery, or the like. The lithium-ion battery may include a liquid lithium-ion battery, a polymer lithium-ion battery, and the like. In the embodiments of the present invention, a wireless rechargeable battery, a positive electrode plate of the wireless rechargeable battery, a negative electrode plate of the wireless rechargeable battery, a charging and discharging control method of the wireless rechargeable battery, and the like that are involved in the present invention are described by using a lithium-ion wireless rechargeable battery as an example.

An induction coil and a controller are disposed in the wireless rechargeable battery. When an alternating current of a particular frequency is supplied to a primary coil (namely, a coil inside a wireless charging transmitter), a particular current is generated in a secondary coil (namely, the induction coil of the wireless rechargeable battery) through electromagnetic induction, to charge the rechargeable battery.

The following describes the embodiments of the present invention with reference to the accompanying drawings in the embodiments of the present invention.

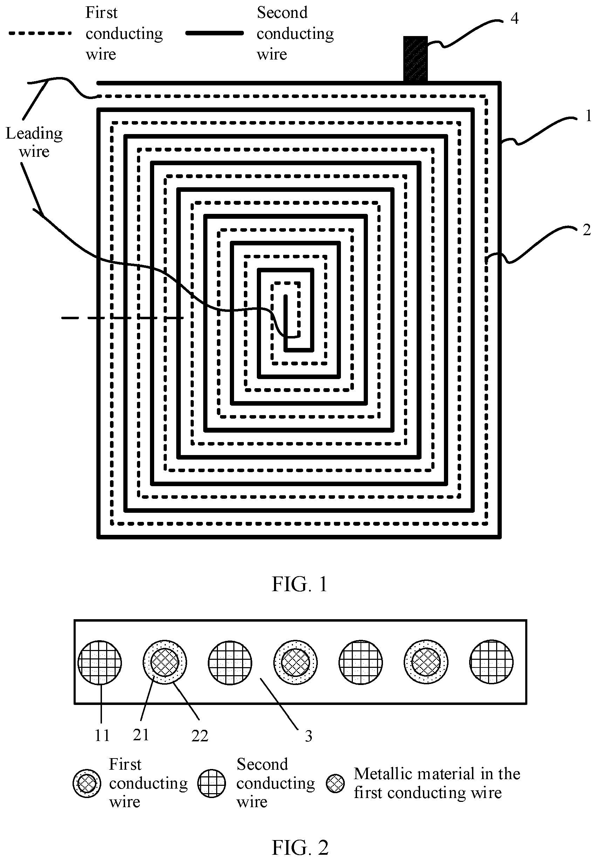

Referring to FIG. 1 and FIG. 2, FIG. 1 is a schematic diagram of a structure of a battery electrode plate according to an embodiment of the present invention. A sectional view of a part of the battery electrode plate in FIG. 2 is a sectional view of a part that is of the battery electrode plate and that is shown by a dashed line in FIG. 1. The battery electrode plate may include a current collector 1, an induction coil 2, and active slurry 3.

The induction coil 2 is a planar coil formed by winding a first conducting wire 22 wrapped by an insulation film 21, and at least a part of the induction coil 2 is embedded in the current collector 1. A first surface of the induction coil 2 is exposed on a second surface of the current collector 1, and the first surface is a surface that is of the induction coil 2 and that is parallel to a plane where the induction coil 2 is located.

The active slurry 3 may be coated on a third surface that is of the current collector 1 and that is opposite to the second surface. It may be understood that the active slurry 3 may be alternatively coated on the second surface of the current collector 1, to cover the second surface of the current collector 1 and the first surface of the induction coil 2.

It may be understood that the induction coil 2 is configured to receive external electromagnetic energy, to generate an induced electromotive force inside the induction coil 2 to charge a wireless rechargeable battery in which the battery electrode plate is located.

The induction coil 2 may be further reused as a heating piece. When a current is supplied to the induction coil 2, the battery electrode plate is heated, to heat the wireless rechargeable battery in which the battery electrode plate is located.

It may be understood that the battery electrode plate may be a positive electrode plate or a negative electrode plate of the rechargeable battery.

In an embodiment of the present invention, the battery electrode plate is a positive electrode plate, the battery electrode plate further includes positive electrode slurry coated on the third surface of the current collector 1, and the positive electrode slurry may include a positive electrode active substance, a first conductive agent, and a first bonding agent.

In another embodiment of the present invention, the battery electrode plate is a negative electrode plate, the battery electrode plate further includes negative electrode slurry coated on the third surface of the current collector 1, and the negative electrode slurry may include a negative electrode active substance, a second conductive agent, and a second bonding agent.

The third surface is a surface that is of the current collector 1 and that is opposite to the second surface.

It should be noted that a material of the current collector of the positive electrode plate may be a conventional material used for a current collector of a positive electrode in a rechargeable battery, and a material of the current collector of the negative electrode plate may be a conventional material used for a current collector of a negative electrode in the rechargeable battery. This is not limited in this embodiment of the present invention.

For example, for a positive electrode plate of a lithium-ion battery, the current collector 1 may be an aluminum sheet, a planar coil made by winding an aluminum conducting wire, or the like.

For a negative electrode plate of the lithium-ion battery, the current collector 1 may be a copper sheet, a planar coil made by winding a copper conducting wire, or the like.

In this embodiment of the present invention, the current collector 1 may be a metal sheet, and the metal sheet includes two opposite surfaces parallel to a plane where the metal sheet is located, namely, the second surface and the third surface in this embodiment of the present invention. The current collector 1 may be alternatively a planar coil formed by winding a metal wire on a plane. It may be understood that the planar coil includes two opposite surfaces parallel to a plane where the planar coil is located, namely, the second surface and the third surface in this embodiment of the present invention. The current collector 1 may be alternatively in another form. This is not limited in this embodiment of the present invention.

Optionally, the first conducting wire may be a metallic wire wrapped by an insulation layer, and metal used by the first conducting wire may be copper, iron, silver, aluminum, or the like, or an alloy of metal.

It should be noted that for the wireless rechargeable battery, when the electrode plate of the wireless rechargeable battery is the positive electrode plate, the second surface of the current collector 1 is a surface facing away from a negative electrode plate of the wireless rechargeable battery. Similarly, when the electrode plate of the wireless rechargeable battery is the negative electrode plate, the second surface of the current collector 1 is a surface facing away from a positive electrode plate of the wireless rechargeable battery, so that the positive electrode plate or the negative electrode plate does not generate electromagnetic shielding for the induction coil 2.

Compared with the prior art in which the induction coil 2 is disposed outside a housing of the wireless rechargeable battery or disposed between the housing and an electrode plate of the wireless rechargeable battery, in this embodiment of the present invention, the induction coil 2 is embedded in the current collector 1, the current collector 1 does not cover the induction coil 2, and the current collector 1 does not generate electromagnetic shielding for the induction coil 2. A manner of disposing the induction coil 2 in this embodiment of the present invention can greatly reduce thickness of the wireless rechargeable battery.

Due to an inherent attribute of the lithium-ion battery, when used at a low temperature, the lithium-ion battery presents relatively high polarization during charging and discharging because dynamics performance of positive and negative electrodes decreases. Forcible charging may cause lithium separation, and even penetrate a separator film, leading to a short circuit between the positive and negative electrodes and further causing outbreak of a fire, explosion, and the like to the battery. In addition, the battery can be hardly discharged at a relatively high current at a low temperature, affecting an output power of the lithium-ion battery.

Based on the foregoing technical problem, the induction coil 2 may be further reused as a heating piece, and is configured to: when a current is supplied to the induction coil 2, heat the battery electrode plate, to heat the wireless rechargeable battery in which the battery electrode plate is located. It may be understood that the controller may control the wireless rechargeable battery to apply a current to the induction coil 2, so that the induction coil 2 generates heat, to improve charging and discharging performance of the wireless rechargeable battery at a low temperature.

In an embodiment of the present invention, as shown in FIG. 2, the induction coil 2 may be a planar helical coil, formed by helically winding, on a plane, the first conducting wire 22 wrapped by the insulation film 21, as shown in FIG. 1. Two ends of the induction coil 2 are led out by using leading wires, and are configured to connect to an external circuit. For example, the two ends of the induction coil 2 are connected to the controller of the wireless rechargeable battery by using the leading wires. When the induction coil 2 induces the external electromagnetic energy, the induced electromotive force is generated inside the induction coil 2, to charge, under control of the controller, the wireless rechargeable battery in which the electrode plate is located.

As shown in FIG. 1, the current collector 1 may be alternatively a planar helical coil, formed by helically winding a second conducting wire 11 on a plane. The first conducting wire 22 and the second conducting wire 11 are helically wound in parallel on a same plane. To clearly see a position relationship between the current collector 1 and the induction coil 2, the active slurry 3 is not shown in FIG. 1. It may be understood that the active slurry 3 may be coated on the second surface and/or the third surface of the current collector 1, and may cover the induction coil 2. The current collector 1 is in direct electrical contact with the active slurry 3 attached thereto, so that the wireless rechargeable battery including the electrode plate can implement an electrochemical reaction.

It may be understood that the planar helical coil formed by winding the first conducting wire 22 and the second conducting wire 11 may be of a circular shape, a rectangular shape, a triangular shape, a trapezoid shape, or another regular or irregular shape, and this is not limited in this embodiment of the present invention. FIG. 1 is described only by using an example in which the planar helical coil is of the rectangular shape.

It may be understood that the first conducting wire 22 and the second conducting wire 11 may be closely wound, that is, a distance between the first conducting wire 22 and the second conducting wire 11 is equal to a sum of a radius of the first conducting wire 22 and a radius of the second conducting wire 11. Alternatively, the first conducting wire 22 and the second conducting wire 11 may be wound at a particular interval, that is, a distance between the first conducting wire 22 and the second conducting wire 11 is greater than a sum of a radius of the first conducting wire 11 and a radius of the second conducting wire 11. This is not limited in this embodiment of the present invention. In the sectional view of the part of the battery electrode plate in FIG. 2, the active slurry 3 is coated on the second surface and the third surface of the current collector 1, to fill a gap between the current collector 1 and the induction coil 2.

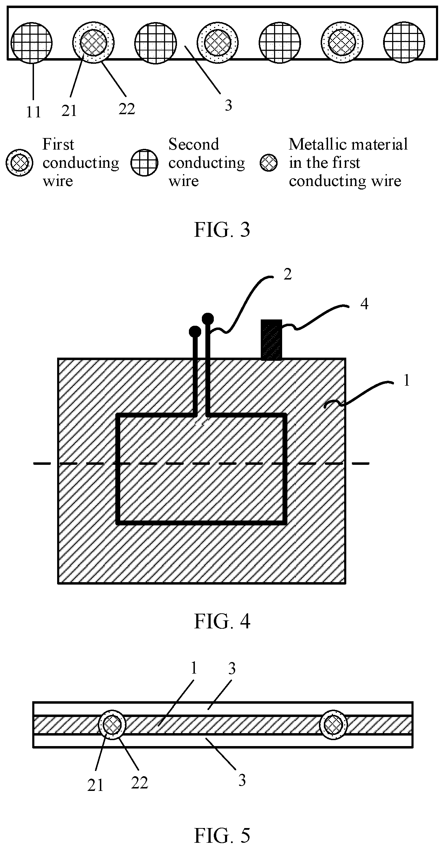

Optionally, FIG. 3 is a sectional view of the part of the battery electrode plate, and the sectional view is another sectional view corresponding to the part shown by the dashed line in FIG. 1. The active slurry 3 may be alternatively coated on the third surface of the current collector 1, and the active slurry 3 may fill a gap between the first conducting wire 22 and the second conducting wire 11.

When used in a positive electrode plate of the wireless rechargeable battery, the second conducting wire 11 may be an aluminum wire. When used in a negative electrode plate of the wireless rechargeable battery, the second conducting wire 11 may be a copper wire. It may be understood that the second conducting wire 11 of the current collector 1 used as the positive electrode plate or the current collector 1 used as the negative electrode plate may be alternatively another metal wire. This is not limited in the present invention.

The battery electrode plate may further include a tab 4, configured to serve as the positive electrode or the negative electrode of the wireless rechargeable battery, and serve as a contact point for charging and discharging the wireless rechargeable battery. A composition material of the tab 4 usually includes conductive metal. For the tab of the positive electrode plate, a composition material of the tab 4 may be the same as that of the current collector 1, for example, aluminum. For the tab of the negative electrode plate, a composition material of the tab 4 may be nickel, copper, nickel-plated brass, or the like.

It should be noted that the embodiment shown in FIG. 2 or FIG. 3 is described by using an example in which both a cross section of the first conducting wire 22 and a cross section of the second conducting wire 11 are of a circular shape. It should be understood that the cross section of the first conducting wire 22 or the cross section of the second conducting wire 11 may be alternatively of a square shape, a triangular shape, a trapezoid shape, or the like, and this is not limited in the present invention.

In an embodiment of the present invention, the current collector 1 may be a metal sheet. Referring to FIG. 4 and FIG. 5, FIG. 4 is a schematic diagram of a structure of another wireless rechargeable battery according to an embodiment of the present invention, FIG. 5 is a sectional view of a part of a battery electrode plate shown in FIG. 4, and the sectional view corresponds to a part shown by a dashed line in FIG. 4. The current collector 1 includes a gap extending through the second surface and the third surface of the current collector 1, and the induction coil 2 is embedded in the gap. The third surface is a surface that is of the current collector 1 and that is opposite to the second surface. As shown in FIG. 5, the active slurry 3 may be coated on the third surface of the current collector 1.

It may be understood that the induction coil may be alternatively another planar coil. This is not limited in this embodiment of the present invention.

It may be understood that for the lithium-ion battery, the positive electrode active substance may be a lithium metal oxide, for example, lithium cobalt oxide (LiCoO2), lithium nickel oxide (LiNiO2), or lithium manganese oxide (LiMn2O4), or may be a lithium salt, for example, lithium iron phosphate (LiFePO4). This is not limited in this embodiment of the present invention.

The first conductive agent may be a conventional positive electrode conductive agent in the art, for example, one or more of graphite, carbon black, acetylene black, and the like. This is not limited in this embodiment of the present invention.

The negative electrode active substance may use a carbon material, and the carbon material may be one or more of graphite, coke, activated carbon, and the like.

The second conductive agent may be a conventional negative electrode conductive agent in the art, for example, one or more of carbon black, nickel powder, copper powder, and the like. This is not limited in this embodiment of the present invention.

The first bonding agent or the second bonding agent may include, but not limited to, one or more of fluorine-containing resin and a polyolefin compound such as polyvinylidene difluoride (PVDF), polytetrafluoroethylene (PTFE), styrene-butadiene rubber (SBR), polyvinyl alcohol, hydroxypropyl methylcellulose, sodium carboxymethyl cellulose, and hydroxyethyl cellulose.

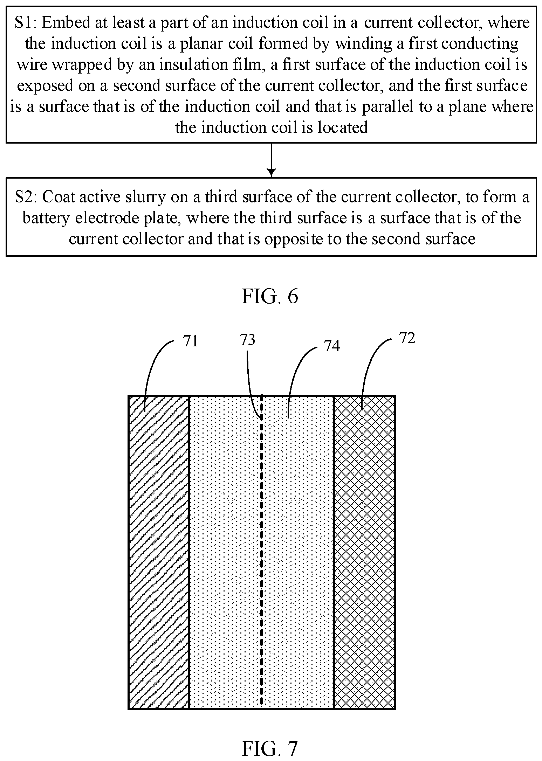

Referring to FIG. 6, FIG. 6 is a schematic flowchart of a preparation method for a battery electrode plate according to an embodiment of the present invention. The preparation method includes all or some of the following steps.

Step S1: Embed at least a part of an induction coil in a current collector, where the induction coil is a planar coil formed by winding a first conducting wire wrapped by an insulation film, a first surface of the induction coil is exposed on a second surface of the current collector, and the first surface is a surface that is of the induction coil and that is parallel to a plane where the induction coil is located.

It may be understood that the induction coil may be configured to receive external electromagnetic energy, to generate an induced electromotive force to charge a wireless rechargeable battery in which a battery electrode plate is located.

The induction coil may be further reused as a heating piece, and is configured to heat the electrode plate of the wireless rechargeable battery when a current is supplied to the induction coil.

Step S2: Coat active slurry on a third surface of the current collector, to form the battery electrode plate, where the third surface is a surface that is of the current collector and that is opposite to the second surface.

Optionally, when the induction coil penetrates the second surface and the third surface of the current collector, active slurry may be further coated on the second surface of the current collector.

In an embodiment of the present invention, a first implementation of step S1 may be: helically winding the first conducting wire and a second conducting wire in parallel on a same plane, to form a first planar helical coil and a second planar helical coil, where the first planar helical coil is the induction coil, and the second planar helical coil is the current collector. For a battery electrode plate formed in this manner, refer to FIG. 1.

In an embodiment of the present invention, a second implementation of step S1 may be: forming a gap extending through the second surface and the third surface on the current collector, where the second surface and the third surface are two opposite surfaces of the current collector; and further, embedding the induction coil in the gap, and enabling the first surface of the induction coil to be exposed on the second surface of the current collector. For a battery electrode plate formed in this manner, refer to FIG. 4.

It should be noted that step S1 may alternatively include another implementation, and a battery electrode plate shown in FIG. 6 may be alternatively formed. Details are not described in this embodiment of the present invention.

When the battery electrode plate is a positive electrode plate, the active slurry is positive electrode active slurry, and the positive electrode active slurry may include a positive electrode active substance, a first conductive agent, and a first bonding agent. An implementation of step S2 may include the following steps:

Step S21: Mix the positive electrode active substance, the first conductive agent, and the first bonding agent according to a preset proportion, and add the mixture to a solvent to form the positive electrode active slurry.

Step S22: Coat the positive electrode active substance on the third surface of the current collector, and form the positive electrode plate by using drying, cold pressing, and fine edge cutting processes.

For example, a lithium-ion positive electrode active substance, conductive carbon powder, and polyvinylidene fluoride are mixed according to a particular weight ratio, and are added to N-methylpyrrolidone (NMP), and then, they are evenly stirred to obtain positive electrode active slurry with certain fluidity. The positive electrode active slurry is coated on the third surface and the second surface that is jointly formed by the current collector and the induction coil shown in FIG. 1. Optionally, a coating weight of the positive electrode active substance may be 0.01 g/cm² to 0.05 g/cm², for example, 0.03 g/cm². This is not limited in the present invention. Further, a to-be-assembled positive electrode plate is obtained through preparation by using the processes such as drying, cold pressing, and fine cutting edge cutting

When the battery electrode plate is a negative electrode plate, the active slurry is negative electrode active slurry, and the negative electrode active slurry may include a negative electrode active substance, a second conductive agent, and a second bonding agent. An implementation of step S2 may include the following steps:
Step S23: Mix the negative electrode active substance, the second conductive agent, and the second bonding agent according to a preset proportion, and add the mixture to a solvent to form the negative electrode active slurry.
Step S24: Coat the negative electrode active substance on the third surface of the current collector, and form the negative electrode plate by using drying, cold pressing, and fine edge cutting processes.

For example, graphite, conductive carbon powder, and polyvinylidene fluoride are mixed according to a weight ratio of 97.5:1:0.5, and are added to N-methylpyrrolidone (NMP), and then, they are evenly stirred to obtain the negative electrode active slurry with certain fluidity. The negative electrode active slurry is coated on the third surface and the second surface that is jointly formed by the current collector and the induction coil shown in FIG. 1. Optionally, a coating weight of the negative electrode active substance may be 0.01 g/cm² to 0.05 g/cm², for example, 0.03 g/cm². This is not limited in the present invention. Further, a to-be-assembled negative electrode plate is prepared by using the processes such as drying, cold pressing, and fine cutting edge cutting

The solvent in step S22 or step S24 may be one of or a combination of a plurality of N-methylpyrrolidone (NMP), dimethylformamide (DMF), diethylformamide (DEF), dimethyl sulfoxide (DMSO), and tetrahydrofuran (THF). The purpose of drying is to remove the solvent from the active slurry.

It should be noted that for a structure of the induction coil, a structure of the current collector, a position relationship between the induction coil and the current collector, the active slurry, the positive electrode active substance, the first conductive agent, the first bonding agent, the negative electrode active substance, the second conductive agent, the second bonding agent, and the like, refer to related descriptions in the foregoing apparatus embodiment of the battery electrode plate, and details are not described in this embodiment of the present invention again.

Compared with the prior art in which the induction coil is disposed outside a housing of the wireless rechargeable battery or disposed between the housing and an electrode plate of the wireless rechargeable battery, in this embodiment of the present invention, the induction coil is embedded in at least one surface of the current collector, the current collector does not cover the induction coil, and the current collector does not generate electromagnetic shielding for the induction coil. A manner of disposing the induction coil in this embodiment of the present invention can greatly reduce thickness of the wireless rechargeable battery.

In addition, the induction coil is reused as a heating piece, so that a heating function of the wireless rechargeable battery is implemented without adding a heating piece, thereby improving charging and discharging performance of the wireless rechargeable battery at a low temperature.

Referring to FIG. 7, FIG. 7 is a schematic diagram of a structure of a wireless rechargeable battery according to an embodiment of the present invention. The wireless rechargeable battery may include a positive electrode plate 71, a negative electrode plate 72, and a separator film 73 and an electrolyte 74 that are disposed between the positive electrode plate 71 and the negative electrode plate72.

Embodiment 1: The positive electrode plate 71 may be the battery electrode plate used as the positive electrode plate in the foregoing embodiments, and the negative electrode plate 72 may be a negative electrode plate in the prior art.

Embodiment 2: The negative electrode plate 72 may be the battery electrode plate used as the negative electrode plate in the foregoing embodiments, and the positive electrode plate 71 may be a positive electrode plate in the prior art.

Embodiment 3: The positive electrode plate 71 may be the battery electrode plate used as the positive electrode plate in the foregoing embodiments, and the negative electrode plate 72 may be the battery electrode plate used as the negative electrode plate in the foregoing embodiments.

For the battery electrode plate used as the positive electrode plate and the battery electrode plate used as the negative electrode plate, refer to related descriptions in the embodiments of the battery electrode plate, and details are not described in this embodiment of the present invention again.

For a wireless rechargeable battery described in Embodiment 1, a method for preparing the wireless rechargeable battery may include: forming the positive electrode plate 71 by using steps S1, S21, and S22; and sequentially stacking the positive electrode plate 71, the separator film 73, and the negative electrode plate 72 to form a laminated piece. In the laminated piece, a first surface 711 that is of an induction coil and that is embedded in the positive electrode plate faces away from the separator film 73 and the negative electrode plate 72. The electrolyte 74 is injected into the laminated piece by using a packaging process, to form the wireless rechargeable battery. Before the packaging process, processes such as welding and bagging may be included. Before the packaging process of the laminated piece is completed, a tab on a current collector and connection wires of the induction coil need to be led out at the same time, to subsequently connect to another component or module in the battery management system.

Similarly, for a wireless rechargeable battery described in Embodiment 2, a method for preparing the wireless rechargeable battery may include: forming the negative electrode plate 72 by using steps S1, S23, and S24; and sequentially stacking the positive electrode plate 71, the separator film 73, and the negative electrode plate 72 to form a laminated piece. In the laminated piece, a first surface that is of an induction coil and that is embedded in the negative electrode plate 72 faces away from the separator film 73 and the positive electrode plate 71. The electrolyte 74 is injected into the laminated piece by using a packaging process, to form the wireless rechargeable battery. Before the packaging process, processes such as welding and bagging may be included. Before the packaging process of the laminated piece is completed, a tab on a current collector and connection wires of the induction coil need to be led out at the same time, to subsequently connect to another component or module in the battery management system.

For a wireless rechargeable battery described in Embodiment 3, a method for preparing the wireless rechargeable battery may include: forming the positive electrode plate 71 by using steps S1, S21, and S22; forming the negative electrode plate 72 by using steps S1, S23, and S24; and sequentially stacking the positive electrode plate 71, the separator film 73, and the negative electrode plate 72 to form a laminated piece. In the laminated piece, a first surface that is of an induction coil and that is embedded in the positive electrode plate 71 faces away from the separator film 73 and the negative electrode plate 72, and a first surface that is of the induction coil and that is embedded in the negative electrode plate 72 faces away from the separator film 73 and the positive electrode plate 71. The electrolyte 74 is injected into the laminated piece by using a packaging process, to form the wireless rechargeable battery. Before the packaging process, processes such as welding and bagging may be included. Before the packaging process of the laminated piece is completed, a tab on a current collector and connection wires of the induction coil need to be led out at the same time, to subsequently connect to another component or module in the battery management system.

It should be noted that for specific implementations of steps S1, S21, S22, S23, and S24, refer to related descriptions of the preparation method for the battery electrode plate in FIG. 7, and details are not described in this embodiment of the present invention.

It should be further noted that a housing of the wireless rechargeable battery can be made of a nonmetallic material, to avoid generation of electromagnetic shielding for the induction coil.

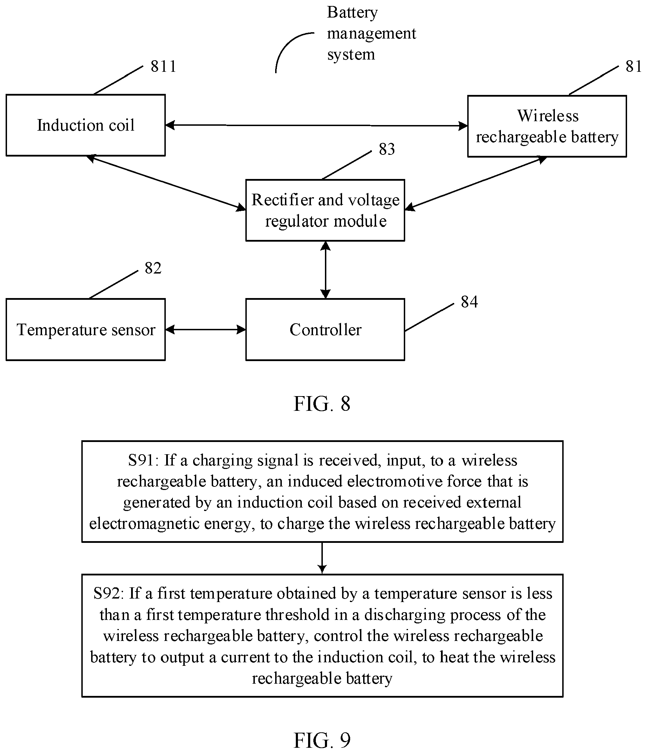

The following describes a battery management system used in the embodiments of the present invention. Referring to a schematic diagram of an architecture of the battery management system shown in FIG. 8, the battery management system may include a wireless rechargeable battery 81, a temperature sensor 82, a rectifier and voltage regulator module 83, a controller 84, and the like. The wireless rechargeable battery 81 further includes an induction coil 811 disposed inside the wireless rechargeable battery 81. To better illustrate a connection relationship between the foregoing components or modules, the induction coil 811 is represented independently. Functions of the components or modules are as follows:

The temperature sensor 82 may be disposed inside the wireless rechargeable battery 81, and is configured to obtain a temperature inside the wireless rechargeable battery 81. Alternatively, the temperature sensor 82 is disposed outside the wireless rechargeable battery 81, and is configured to obtain a temperature of an environment in which the wireless rechargeable battery 81 is located or a temperature of a surface of the wireless rechargeable battery 81.

The wireless rechargeable battery 81 may be a rechargeable battery with a built-in induction coil 811. For a structure of the wireless rechargeable battery 81, refer to related descriptions of the wireless rechargeable battery described in FIG. 7, and details are not described in this embodiment of the present invention again. The wireless rechargeable battery 81 may be configured to supply power to an external circuit and store electric energy.

The induction coil 811 is configured to receive external electromagnetic energy, to generate an induced electromotive force. It may be understood that the induced electromotive force may be used as a power supply to charge the wireless rechargeable battery 81 after passing through the rectifier and voltage regulator module 83. Optionally, the induction coil 811 is further configured to heat the wireless rechargeable battery 81 when a current is supplied to the induction coil 811.

It may be understood that the wireless rechargeable battery 81 includes at least four interfaces, namely, a positive electrode, a negative electrode, and two leading wires respectively connected to two ends of the induction coil 811. The positive electrode may be a positive electrode plate or a tab connected to the positive electrode plate, and the negative electrode may be a negative electrode plate or a tab connected to the negative electrode plate. The positive electrode and the negative electrode are configured to implement charging or discharging of the wireless rechargeable battery. The leading wires at the two ends of the induction coil 811 are configured to connect to the rectifier and voltage regulator module 83, the positive and negative electrodes of the wireless rechargeable battery 81, a load, or the like, to implement a function of the induction coil 812.

The rectifier and voltage regulator module 83 is configured to perform rectification and voltage regulation on the induced electromotive force generated by the induction coil 811, and output the induced electromotive force obtained after rectification and voltage regulation to the positive and negative electrodes of the wireless rechargeable battery 81, to charge the wireless rechargeable battery 81.

The controller is configured to: if a charging signal is received, input, to the wireless rechargeable battery 81, the induced electromotive force that is generated by the induction coil 811 based on the received external electromagnetic energy, to charge the wireless rechargeable battery 81; and when a first temperature obtained by the temperature sensor 82 is less than a first temperature threshold in a discharging process of the wireless rechargeable battery, control the wireless rechargeable battery 81 to output a current to the induction coil 811, to heat the wireless rechargeable battery 81.

For an implementation of a specific function of the controller 84, refer to related descriptions of the following battery management method, and details are not described in this embodiment of the present invention.

The following describes a battery management method used in the embodiments of the present invention. Referring to a schematic flowchart of the battery management method shown in FIG. 9, the battery management method may be implemented by using software or hardware. The method includes, but not limited to, some or all of the following steps.

Step S91: If a charging signal is received, input, to a wireless rechargeable battery, an induced electromotive force that is generated by an induction coil based on received external electromagnetic energy, to charge the wireless rechargeable battery.

The induction coil is disposed inside the wireless rechargeable battery. For a structure of the wireless rechargeable battery, refer to related descriptions of the wireless rechargeable battery described in FIG. 8, and details are not described in this embodiment of the present invention again. The wireless rechargeable battery may be configured to supply power to an external circuit and store electric energy.

It may be understood that after inducing the external electromagnetic energy, the induction coil generates the induced electromotive force. The charging signal may be a voltage jump signal or a high level signal generated by leading wires of the induction coil, or another signal triggered by the induced electromotive force. This is not limited in this embodiment of the present invention.

Step S92: If a first temperature obtained by a temperature sensor is less than a first temperature threshold in a discharging process of the wireless rechargeable battery, control the wireless rechargeable battery to output a current to the induction coil, to heat the wireless rechargeable battery.

Optionally, the first temperature threshold may be 8°C, 5°C, 0°C, -10°C, or another temperature value, and may be determined based on charging and discharging performance of the wireless rechargeable battery at each temperature. This is not limited in this embodiment of the present invention.

It may be understood that in this embodiment of the present invention, the induction coil of the wireless rechargeable battery may be reused as a heating piece, to heat the wireless rechargeable battery, thereby improving charging and discharging performance of the wireless rechargeable battery at a low temperature.

In an embodiment of the present invention, an implementation of step S91 may be: if the charging signal is received, when a second temperature obtained by the temperature sensor is less than a second temperature threshold, conducting, by the controller, the induction coil, to heat, by using the external electromagnetic energy received by the induction coil, the wireless rechargeable battery in which the induction coil is located; and further, when a third temperature obtained by the temperature sensor is not less than the second temperature threshold, inputting, by the induction coil to the wireless rechargeable battery, the induced electromotive force that is generated by the induction coil based on the received external electromagnetic energy, to charge the wireless rechargeable battery.

As can be learned, when the currently obtained second temperature is less than the second temperature threshold, charging performance of the wireless rechargeable battery is poor, and the wireless rechargeable battery can be hardly charged. In this case, the induction coil may be conducted. To be specific, two ends of the induction coil are connected by using a load (for example, a resistor), to form a circuit loop, and generate a current, and the current flows through the induction coil, so that the induction coil generates heat. When the currently obtained third temperature is not less than the second temperature threshold, the circuit loop between the induction coil and the load is broken, and the two ends of the induction coil are connected to a positive electrode and a negative electrode of the wireless rechargeable battery by using a rectifier and voltage regulator module, to charge the wireless rechargeable battery. In this embodiment of the present invention, charging performance of the wireless rechargeable battery at a low temperature can be improved.

It may be understood that the second temperature may be a temperature value obtained by the temperature sensor when the controller receives the charging signal. The second temperature threshold may be 8°C, 5°C, 0°C, -10°C, or another temperature value, and may be determined based on charging and discharging performance of the wireless rechargeable battery at each temperature. This is not limited in this embodiment of the present invention.

It should be noted that after the induction coil receives the external electromagnetic energy, the wireless rechargeable battery may be directly charged without being heated. This is not limited in this embodiment of the present invention.

It should be further noted that step S91 and step S92 may be performed in any sequence, and this is not limited in this embodiment of the present invention.

In an embodiment of the present invention, an implementation of step S92 may be: when the first temperature obtained by the temperature sensor is less than the first temperature threshold and a residual capacity of the rechargeable battery is greater than a preset capacity threshold in the discharging process of the wireless rechargeable battery, controlling, by the controller, the wireless rechargeable battery to output the current to the induction coil, to heat the wireless rechargeable battery.

As can be learned, when the currently obtained first temperature is less than the first temperature threshold, discharging performance of the wireless rechargeable battery is poor, and the wireless rechargeable battery can be hardly discharged, leading to a phenomenon such as crash or automatic shutdown of a device. In this case, the wireless rechargeable battery may be connected to the induction coil. To be specific, the two ends of the induction coil are connected to the positive electrode and the negative electrode of the wireless rechargeable battery by using a load (for example, a resistor), to form a circuit loop, and generate a current, and the current flows through the induction coil, so that the induction coil generates heat.

Optionally, when the currently obtained temperature is not less than the first temperature threshold, the controller may break the circuit loop formed by the wireless rechargeable battery and the induction coil, to avoid excessive heat and save electric energy of the wireless rechargeable battery. In this embodiment of the present invention, discharging performance of the wireless rechargeable battery at a low temperature can be improved, and a phenomenon such as crash or automatic shutdown of a device at a low temperature can be avoided.

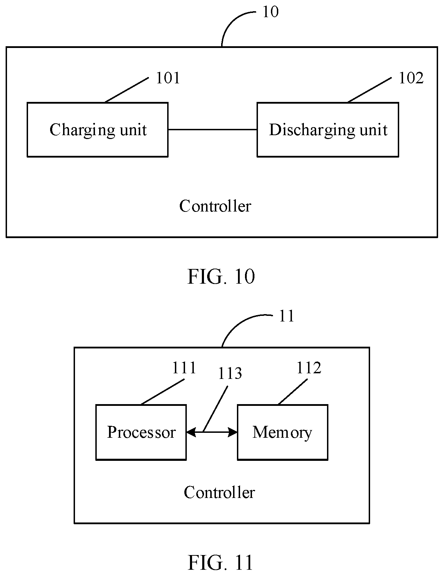

Referring to FIG. 10, FIG. 10 is a schematic diagram of a structure of a controller 10 according to an embodiment of the present invention. The controller 10 may include:
a charging unit 101, configured to: if a charging signal is received, input, to a wireless rechargeable battery, an induced electromotive force that is generated by an induction coil based on received external electromagnetic energy, to charge the wireless rechargeable battery, where the induction coil is disposed inside the wireless rechargeable battery; and
a discharging unit 102, configured to: if a first temperature obtained by a temperature sensor is less than a preset temperature threshold in a discharging process of the wireless rechargeable battery, control the wireless rechargeable battery to output a current to the induction coil, to heat the wireless rechargeable battery.

Optionally, the discharging unit 102 is specifically configured to: when the first temperature obtained by the temperature sensor is less than a first temperature threshold and a residual capacity of the rechargeable battery is greater than a preset capacity threshold in the discharging process of the wireless rechargeable battery, control the wireless rechargeable battery to output the current to the induction coil, to heat the wireless rechargeable battery.

Optionally, the charging unit 101 is specifically configured to:
if the charging signal is received, when a second temperature obtained by the temperature sensor is less than a second temperature threshold, conduct the induction coil, to heat, by using the external electromagnetic energy received by the induction coil, the wireless rechargeable battery in which the induction coil is located; and
when a third temperature obtained by the temperature sensor is not less than the second temperature threshold, input, to the wireless rechargeable battery, the induced electromotive force that is generated by the induction coil based on the received external electromagnetic energy, to charge the wireless rechargeable battery.

It should be noted that for specific implementations of the units of the controller, refer to related descriptions in the foregoing battery management method embodiment, and details are not described in this embodiment of the present invention again.

Referring to FIG. 11, FIG. 11 is a schematic diagram of a structure of another controller 11 according to an embodiment of the present invention. The controller 11 may include: a processor 111 and a memory 112. The processor 111 may be connected to the memory 112, a temperature sensor, and the like by using a communications bus 113.

The processor 111 is a control center of the controller 11, connects all parts of the controller 11 and an external component by using various interfaces and lines, and executes various functions of the controller by running or executing program code stored in the memory 112 and invoking data stored in the memory 112. The processor 111 may be a central processing unit (CPU), a field programmable gate array (FPGA), an application-specific integrated circuit (ASIC), and a digital signal processor (DSP), or another programmable logic device, a transistor logic device, a hardware component, or any combination thereof. This is not limited in the present invention.

The memory 112 may include a high speed random access memory, and may further include a non-volatile memory, for example, at least one disk storage component, a flash memory, or another non-volatile solid state storage component.

The processor 111 is configured to invoke the data and the program code that are stored in the memory 112, to perform the following operations:
if a charging signal is received, inputting, to a wireless rechargeable battery, an induced electromotive force that is generated by an induction coil based on received external electromagnetic energy, to charge the wireless rechargeable battery, where the induction coil is disposed inside the wireless rechargeable battery; and
if a first temperature obtained by a temperature sensor is less than a first temperature threshold in a discharging process of the wireless rechargeable battery, controlling the wireless rechargeable battery to output a current to the induction coil, to heat the wireless rechargeable battery.

Optionally, when the processor 111 performs the following operation: when the first temperature obtained by the temperature sensor is less than the first temperature threshold in the discharging process of the wireless rechargeable battery, controlling the wireless rechargeable battery to output the current to the induction coil, to heat the wireless rechargeable battery, the processor 111 is specifically configured to perform the following operation:
when the first temperature obtained by the temperature sensor is less than the first temperature threshold and a residual capacity of the rechargeable battery is greater than a preset capacity threshold in the discharging process of the wireless rechargeable battery, controlling the wireless rechargeable battery to output the current to the induction coil, to heat the wireless rechargeable battery.

Optionally, when the processor 111 performs the following operation: if the charging signal is received, inputting, to the wireless rechargeable battery, the induced electromotive force that is generated by the induction coil based on the received external electromagnetic energy, to charge the wireless rechargeable battery, the processor 111 is specifically configured to perform the following operations:
if the charging signal is received, when a second temperature obtained by the temperature sensor is less than a second temperature threshold, conducting the induction coil, to heat, by using the external electromagnetic energy received by the induction coil, the wireless rechargeable battery in which the induction coil is located; and
when a third temperature obtained by the temperature sensor is not less than the second temperature threshold, inputting, to the wireless rechargeable battery, the induced electromotive force that is generated by the induction coil based on the received external electromagnetic energy, to charge the wireless rechargeable battery.

It should be noted that for specific implementations of the components of the controller 11, refer to related descriptions in the foregoing battery management method embodiment, and details are not described in this embodiment of the present invention again.

An embodiment of the present invention further provides a device using the foregoing controller and the foregoing battery management system. The device may be a mobile phone, a tablet computer, a personal computer, a desktop computer, another device, or the like. This is not limited in this embodiment of the present invention.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes any medium that can store program code, such as a ROM, a random access memory RAM, a magnetic disk, or an optical disc.

## Claims

1. A battery electrode plate, comprising a current collector (1) and an induction coil (2), wherein the induction coil (2) is a planar coil formed by winding a first conducting wire (22) wrapped by an insulation film (21), at least a part of the induction coil (2) is embedded in the current collector (1), a first surface of the induction coil (2) is exposed on a second surface of the current collector (1), and the first surface is a surface that is of the induction coil (2) and that is parallel to a plane where the induction coil (2) is located.

2. The battery electrode plate according to claim 1, wherein the induction coil (2) is configured to receive external electromagnetic energy, to generate an induced electromotive force to charge a wireless rechargeable battery in which the battery electrode plate is located.

3. The battery electrode plate according to claim 1, wherein the induction coil (2) is further configured to heat an electrode plate of the wireless rechargeable battery when a current is supplied to the induction coil (2).

4. The battery electrode plate according to any one of claims 1 to 3, wherein the induction coil (2) is a planar helical coil.

5. The battery electrode plate according to claim 4, wherein the current collector (1) is a planar helical coil formed by helically winding a second conducting wire (11) on a plane, and the first conducting wire (22) and the second conducting wire (11) are wound in parallel on a same plane.

6. The battery electrode plate according to any one of claims 1 to 4, wherein the current collector (1) comprises a gap extending through the second surface and a third surface, the induction coil (2) is embedded in the gap, and the third surface is a surface that is of the current collector (1) and that is opposite to the second surface.

7. The battery electrode plate according to any one of claims 1 to 6, wherein
the battery electrode plate is a positive electrode plate, and the battery electrode plate further comprises a positive electrode active substance, a first conductive agent, and a first bonding agent that are coated on the third surface of the current collector (1); or the battery electrode plate is a negative electrode plate, and the battery electrode plate further comprises a negative electrode active substance, a second conductive agent, and a second bonding agent that are coated on the third surface of the current collector (1); and
the third surface is a surface that is of the current collector (1) and that is opposite to the second surface.

8. A preparation method for a battery electrode plate, comprising:
embedding at least a part of an induction coil (2) in a current collector (1), wherein the induction coil (2) is a planar coil formed by winding a first conducting wire (22) wrapped by an insulation film, a first surface of the induction coil (2) is exposed on a second surface of the current collector (1), and the first surface is a surface that is of the induction coil (2) and that is parallel to a plane where the induction coil (2) is located; and
coating active slurry (3) on a third surface of the current collector (1), to form the battery electrode plate, wherein the third surface is a surface that is of the current collector (1) and that is opposite to the first surface.

9. The preparation method for a battery electrode plate according to claim 8, wherein the embedding at least a part of an induction coil (2) in a current collector (1) comprises:
helically winding the first conducting wire (22) and a second conducting wire (11) in parallel on a same plane, to form a first planar helical coil and a second planar helical coil, wherein the first planar helical coil is an induction coil (2), and the second planar helical coil is a current collector (1).

10. The preparation method for a battery electrode plate according to claim 8, wherein the embedding at least a part of an induction coil (2) in a current collector (1) comprises:
forming a gap extending through the second surface and the third surface on the current collector (1), wherein the second surface and the third surface are two opposite surfaces of the current collector (1); and
embedding the induction coil (2) in the gap, so that the first surface of the induction coil (2) is exposed on the second surface of the current collector (1).

11. A wireless rechargeable battery, comprising a positive electrode plate (71), a negative electrode plate (72), and a separator film (73) and an electrolyte (74) that are disposed between the positive electrode plate (71) and the negative electrode plate (72), wherein
the positive electrode plate (71) or the negative electrode plate (72) is the battery electrode plate according to any one of claims 1 to 5.

12. A battery management method, comprising:
inputting (S91), to a wireless rechargeable battery (81) according to claim 11 if a charging signal is received, an induced electromotive force that is generated by an induction coil (2) based on received external electromagnetic energy, to charge the wireless rechargeable battery (81), wherein the induction coil (2) is disposed inside the wireless rechargeable battery (81); and
controlling (S92), if a first temperature obtained by a temperature sensor (82) is less than a first temperature threshold in a discharging process of the wireless rechargeable battery (81), the wireless rechargeable battery to output a current to the induction coil (2), to heat the wireless rechargeable battery (81).

13. The battery management method according to claim 12, wherein the controlling, if a first temperature obtained by a temperature sensor (82) is less than a first temperature threshold in a discharging process of the wireless rechargeable battery (81), the wireless rechargeable battery (81) to output a current to the induction coil (2), to heat the wireless rechargeable battery (81) comprises:
when the first temperature obtained by the temperature sensor (82) is less than the first temperature threshold and a residual capacity of the rechargeable battery (81) is greater than a preset capacity threshold in the discharging process of the wireless rechargeable battery (81), controlling the wireless rechargeable battery (81) to output the current to the induction coil (2), to heat the wireless rechargeable battery (81).

14. The battery management method according to claim 12, wherein the inputting, to a wireless rechargeable battery (81) if a charging signal is received, an induced electromotive force that is generated by an induction coil (2) based on received external electromagnetic energy, to charge the wireless rechargeable battery (81) comprises:
if the charging signal is received, when a second temperature obtained by the temperature sensor (82) is less than a second temperature threshold, conducting the induction coil (2), to heat, by using the external electromagnetic energy received by the induction coil (2), the wireless rechargeable battery (81) in which the induction coil (2) is located; and
when a third temperature obtained by the temperature sensor (82) is not less than the second temperature threshold, inputting, to the wireless rechargeable battery (81), the induced electromotive force that is generated by the induction coil (2) based on the received external electromagnetic energy, to charge the wireless rechargeable battery (81).

## Patentansprüche

1. Batterieelektrodenplatte, die einen Stromkollektor (1) und eine Induktionsspule (2) umfasst, wobei die Induktionsspule (2) eine ebene Spule ist, die durch Wickeln eines ersten leitenden Drahtes (22) gebildet wird, der mit einem Isolierfilm (21) umwickelt ist, wobei zumindest ein Teil der Induktionsspule (2) in den Stromkollektor (1) eingebettet ist, eine erste Fläche der Induktionsspule (2) auf einer zweiten Fläche des Stromkollektors (1) freiliegt, und die erste Fläche eine Fläche der Induktionsspule (2) ist, die parallel zu einer Ebene liegt, in der die Induktionsspule (2) angeordnet ist.

2. Batterieelektrodenplatte nach Anspruch 1, wobei die Induktionsspule (2) so konfiguriert ist, dass sie externe elektromagnetische Energie empfängt, um eine induzierte elektromotorische Kraft zu erzeugen, um eine drahtlos wiederaufladbare Batterie zu laden, in der sich die Batterieelektrodenplatte befindet.

3. Batterieelektrodenplatte nach Anspruch 1, wobei die Induktionsspule (2) ferner so konfiguriert ist, dass sie eine Elektrodenplatte der drahtlos wiederaufladbaren Batterie erwärmt, wenn der Induktionsspule (2) Strom zugeführt wird.

4. Batterieelektrodenplatte nach einem der Ansprüche 1 bis 3, wobei die Induktionsspule (2) eine ebene spiralförmige Spule ist.

5. Batterieelektrodenplatte nach Anspruch 4, wobei der Stromkollektor (1) eine ebene spiralförmige Spule ist, die durch spiralförmiges Wickeln eines zweiten leitenden Drahtes (11) auf einer Ebene gebildet wird, und der erste leitende Draht (22) und der zweite leitende Draht (11) parallel auf derselben Ebene gewickelt sind.

6. Batterieelektrodenplatte nach einem der Ansprüche 1 bis 4, wobei der Stromkollektor (1) einen Spalt umfasst, der sich durch die zweite Fläche und eine dritte Fläche erstreckt, die Induktionsspule (2) in den Spalt eingebettet ist und die dritte Fläche eine Fläche des Stromkollektors (1) ist, die der zweiten Fläche gegenüberliegt.

7. Batterieelektrodenplatte nach einem der Ansprüche 1 bis 6, wobei
die Batterieelektrodenplatte eine positive Elektrodenplatte ist und die Batterieelektrodenplatte ferner eine aktive Substanz für die positive Elektrode, ein erstes leitendes Mittel und ein erstes Bindemittel umfasst, die auf die dritte Fläche des Stromkollektors (1) aufgebracht sind; oder die Batterieelektrodenplatte eine negative Elektrodenplatte ist und die Batterieelektrodenplatte ferner eine aktive Substanz für die negative Elektrode, ein zweites leitendes Mittel und ein zweites Bindemittel umfasst, die auf die dritte Fläche des Stromkollektors (1) aufgebracht sind; und
die dritte Fläche eine Fläche des Stromkollektors (1) ist und der zweiten Fläche gegenüberliegt.

8. Herstellungsverfahren für eine Batterieelektrodenplatte umfassend:
Einbetten mindestens eines Teils einer Induktionsspule (2) in einen Stromkollektor (1), wobei die Induktionsspule (2) eine ebene Spule ist, die durch Wickeln eines ersten leitenden Drahtes (22) gebildet wird, der mit einem Isolierfilm umwickelt ist, wobei eine erste Fläche der Induktionsspule (2) auf einer zweiten Fläche des Stromkollektors (1) freiliegt und die erste Fläche eine Fläche der Induktionsspule (2) ist, die parallel zu einer Ebene ist, in der die Induktionsspule (2) angeordnet ist; und
Beschichten einer aktiven Aufschlämmung (3) auf einer dritten Fläche des Stromkollektors (1), um die Batterieelektrodenplatte zu bilden, wobei die dritte Fläche eine Fläche des Stromkollektors (1) ist und der ersten Fläche gegenüberliegt.

9. Herstellungsverfahren für eine Batterieelektrodenplatte nach Anspruch 8, wobei das Einbetten mindestens eines Teils einer Induktionsspule (2) in einen Stromkollektor (1) Folgendes umfasst:
spiralförmiges Wickeln des ersten leitenden Drahts (22) und eines zweiten leitenden Drahts (11) parallel auf einer gleichen Ebene, um eine erste ebene spiralförmige Spule und eine zweite ebene spiralförmige Spule zu bilden, wobei die erste ebene spiralförmige Spule eine Induktionsspule (2) ist und die zweite ebene spiralförmige Spule ein Stromkollektor (1) ist.

10. Herstellungsverfahren für eine Batterieelektrodenplatte nach Anspruch 8, wobei das Einbetten mindestens eines Teils einer Induktionsspule (2) in einen Stromkollektor (1) Folgendes umfasst:
Bilden eines Spalts, der sich durch die zweite Fläche und die dritte Fläche auf dem Stromkollektor (1) erstreckt, wobei die zweite Fläche und die dritte Fläche zwei gegenüberliegende Flächen des Stromkollektors (1) sind; und
Einbetten der Induktionsspule (2) in den Spalt, so dass die erste Fläche der Induktionsspule (2) auf der zweiten Fläche des Stromkollektors (1) freiliegt.

11. Drahtlos wiederaufladbare Batterie, die eine positive Elektrodenplatte (71), eine negative Elektrodenplatte (72) und einen Trennfilm (73) und einen Elektrolyten (74) umfasst, die zwischen der positiven Elektrodenplatte (71) und der negativen Elektrodenplatte (72) angeordnet sind, wobei
die positive Elektrodenplatte (71) oder die negative Elektrodenplatte (72) die Batterieelektrodenplatte nach einem der Ansprüche 1 bis 5 ist.

12. Batterieverwaltungsverfahren das Folgendes umfasst:
Eingeben (S91) einer induzierten elektromotorischen Kraft, die von einer Induktionsspule (2) basierend auf empfangener externer elektromagnetischer Energie erzeugt wird, in eine drahtlos wiederaufladbare Batterie (81) nach Anspruch 11, wenn ein Ladesignal empfangen wird, um die drahtlos wiederaufladbare Batterie (81) zu laden, wobei die Induktionsspule (2) innerhalb der drahtlos wiederaufladbaren Batterie (81) angeordnet ist; und Steuern (S92) der drahtlosen wiederaufladbaren Batterie, wenn eine erste von einem Temperatursensor (82) ermittelte Temperatur unter einem ersten Temperaturschwellenwert in einem Entladevorgang der drahtlos wiederaufladbaren Batterie (81) liegt, um einen Strom an die Induktionsspule (2) auszugeben, um die drahtlose wiederaufladbare Batterie (81) zu erwärmen.

13. Batterieverwaltungsverfahren nach Anspruch 12, wobei das Steuern der drahtlos wiederaufladbaren Batterie (81), wenn eine erste von einem Temperatursensor (82) ermittelte Temperatur unter einem ersten Temperaturschwellenwert in einem Entladevorgang der drahtlosen wiederaufladbaren Batterie (81) liegt, um einen Strom an die Induktionsspule (2) auszugeben, um die drahtlose wiederaufladbare Batterie (81) zu erwärmen, Folgendes umfasst:
wenn die von dem Temperatursensor (82) ermittelte erste Temperatur unter dem ersten Temperaturschwellenwert liegt und eine Restkapazität der wiederaufladbaren Batterie (81) größer ist als ein voreingestellter Kapazitätsschwellenwert in dem Entladeprozess der drahtlosen wiederaufladbaren Batterie (81), Steuern der drahtlos wiederaufladbaren Batterie (81), um den Strom an die Induktionsspule (2) auszugeben, um die drahtlos wiederaufladbare Batterie (81) zu erwärmen.

14. Batterieverwaltungsverfahren nach Anspruch 12, wobei das Eingeben einer induzierten elektromotorischen Kraft, die von einer Induktionsspule (2) basierend auf der empfangenen externen elektromagnetischen Energie erzeugt wird, in eine drahtlos wiederaufladbare Batterie (81), wenn ein Ladesignal empfangen wird, um die drahtlos wiederaufladbare Batterie (81) zu laden, Folgendes umfasst:
wenn das Ladesignal empfangen wird, wenn eine zweite von dem Temperatursensor (82) erhaltene Temperatur unter einem zweiten Temperaturschwellenwert liegt, Leiten der Induktionsspule (2), um unter Verwendung der von der Induktionsspule (2) empfangenen externen elektromagnetischen Energie die drahtlos wiederaufladbare Batterie (81) zu erwärmen, in der sich die Induktionsspule (2) befindet; und
wenn eine durch den Temperatursensor (82) erhaltene dritte Temperatur nicht unter dem zweiten Temperaturschwellenwert liegt, Eingeben der induzierten elektromotorischen Kraft, die durch die Induktionsspule (2) basierend auf der empfangenen externen elektromagnetischen Energie erzeugt wird, in die drahtlos wiederaufladbare Batterie (81), um die drahtlos wiederaufladbare Batterie (81) zu laden.

## Revendications

1. Plaque d'électrode de batterie, comprenant un collecteur de courant (1) et une bobine d'induction (2), dans laquelle la bobine d'induction (2) est une bobine plane formée en enroulant un premier fil conducteur (22) enveloppé par un film isolant (21), au moins une partie de la bobine d'induction (2) est intégrée dans le collecteur de courant (1), une première surface de la bobine d'induction (2) est exposée sur une deuxième surface du collecteur de courant (1), et la première surface est une surface qui est celle de la bobine d'induction (2) et qui est parallèle à un plan où la bobine d'induction (2) est située.

2. Plaque d'électrode de batterie selon la revendication 1, dans laquelle la bobine d'induction (2) est configurée pour recevoir de l'énergie électromagnétique externe, pour générer une force électromotrice induite pour charger une batterie rechargeable sans fil dans laquelle la plaque d'électrode de batterie est située.

3. Plaque d'électrode de batterie selon la revendication 1, dans laquelle la bobine d'induction (2) est en outre configurée pour chauffer une plaque d'électrode de la batterie rechargeable sans fil lorsqu'un courant est fourni à la bobine d'induction (2).

4. Plaque d'électrode de batterie selon l'une quelconque des revendications 1 à 3, dans laquelle la bobine d'induction (2) est une bobine hélicoïdale plane.

5. Plaque d'électrode de batterie selon la revendication 4, dans laquelle le collecteur de courant (1) est une bobine hélicoïdale plane formée en enroulant en hélice un second fil conducteur (11) sur un plan, et le premier fil conducteur (22) et le second fil conducteur (11) sont enroulés en parallèle sur un même plan.

6. Plaque d'électrode de batterie selon l'une quelconque des revendications 1 à 4, dans laquelle le collecteur de courant (1) comprend un espace s'étendant à travers la deuxième surface et une troisième surface, la bobine d'induction (2) est intégrée dans l'espace, et la troisième surface est une surface qui est celle du collecteur de courant (1) et qui est opposée à la deuxième surface.

7. Plaque d'électrode de batterie selon l'une quelconque des revendications 1 à 6, dans laquelle
la plaque d'électrode de batterie est une plaque d'électrode positive, et la plaque d'électrode de batterie comprend en outre une substance active d'électrode positive, un premier agent conducteur et un premier agent de liaison qui sont appliqués sur la troisième surface du collecteur de courant (1) ; ou la plaque d'électrode de batterie est une plaque d'électrode négative, et la plaque d'électrode de batterie comprend en outre une substance active d'électrode négative, un second agent conducteur et un second agent de liaison qui sont appliqués sur la troisième surface du collecteur de courant (1) ; et
la troisième surface est une surface qui est celle du collecteur de courant (1) et qui est opposée à la deuxième surface.

8. Procédé de préparation d'une plaque d'électrode de batterie, comprenant :
l'intégration d'au moins une partie d'une bobine d'induction (2) dans un collecteur de courant (1), dans lequel la bobine d'induction (2) est une bobine plane formée en enroulant un premier fil conducteur (22) enveloppé par un film isolant, une première surface de la bobine d'induction (2) est exposée sur une deuxième surface du collecteur de courant (1), et la première surface est une surface qui est celle de la bobine d'induction (2) et qui est parallèle à un plan où la bobine d'induction (2) est située ; et
l'application d'une suspension active (3) sur une troisième surface du collecteur de courant (1), pour former la plaque d'électrode de batterie, dans lequel la troisième surface est une surface qui est celle du collecteur de courant (1) et qui est opposée à la première surface.

9. Procédé de préparation d'une plaque d'électrode de batterie selon la revendication 8, dans lequel l'intégration d'au moins une partie d'une bobine d'induction (2) dans un collecteur de courant (1) comprend :
l'enroulement en hélice du premier fil conducteur (22) et d'un second fil conducteur (11) en parallèle sur un même plan, pour former une première bobine hélicoïdale plane et une seconde bobine hélicoïdale plane, dans lequel la première bobine hélicoïdale plane est une bobine d'induction (2), et la seconde bobine hélicoïdale plane est un collecteur de courant (1).

10. Procédé de préparation d'une plaque d'électrode de batterie selon la revendication 8, dans lequel l'intégration d'au moins une partie d'une bobine d'induction (2) dans un collecteur de courant (1) comprend :
la formation d'un espace s'étendant à travers la deuxième surface et la troisième surface sur le collecteur de courant (1), dans lequel la deuxième surface et la troisième surface sont deux surfaces opposées du collecteur de courant (1) ; et
l'intégration de la bobine d'induction (2) dans l'espace, de sorte que la première surface de la bobine d'induction (2) soit exposée sur la deuxième surface du collecteur de courant (1).

11. Batterie rechargeable sans fil, comprenant une plaque d'électrode positive (71), une plaque d'électrode négative (72) et un film séparateur (73) et un électrolyte (74) qui sont disposés entre la plaque d'électrode positive (71) et la plaque d'électrode négative (72), dans laquelle
la plaque d'électrode positive (71) ou la plaque d'électrode négative (72) est la plaque d'électrode de batterie selon l'une quelconque des revendications 1 à 5.

12. Procédé de gestion de batterie, comprenant :
l'introduction (S91), dans une batterie rechargeable sans fil (81) selon la revendication 11, si un signal de charge est reçu, d'une force électromotrice induite qui est générée par une bobine d'induction (2) sur la base d'une énergie électromagnétique externe reçue, pour charger la batterie rechargeable sans fil (81), dans lequel la bobine d'induction (2) est disposée à l'intérieur de la batterie rechargeable sans fil (81) ; et
la commande (S92), si une première température obtenue par un capteur de température (82) est inférieure à un premier seuil de température dans un processus de décharge de la batterie rechargeable sans fil (81), de la batterie rechargeable sans fil pour délivrer un courant à la bobine d'induction (2), pour chauffer la batterie rechargeable sans fil (81).

13. Procédé de gestion de batterie selon la revendication 12, dans lequel la commande, si une première température obtenue par un capteur de température (82) est inférieure à un premier seuil de température dans un processus de décharge de la batterie rechargeable sans fil (81), de la batterie rechargeable sans fil (81) pour délivrer un courant à la bobine d'induction (2), pour chauffer la batterie rechargeable sans fil (81) comprend :
lorsque la première température obtenue par le capteur de température (82) est inférieure au premier seuil de température et qu'une capacité résiduelle de la batterie rechargeable (81) est supérieure à un seuil de capacité prédéfini dans le processus de décharge de la batterie rechargeable sans fil (81), la commande de la batterie rechargeable sans fil (81) pour délivrer le courant à la bobine d'induction (2), pour chauffer la batterie rechargeable sans fil (81).

14. Procédé de gestion de batterie selon la revendication 12, dans lequel l'introduction, dans une batterie rechargeable sans fil (81), si un signal de charge est reçu, d'une force électromotrice induite qui est générée par une bobine d'induction (2) sur la base d'une énergie électromagnétique externe reçue, pour charger la batterie rechargeable sans fil (81) comprend :
si le signal de charge est reçu, lorsqu'une deuxième température obtenue par le capteur de température (82) est inférieure à un deuxième seuil de température, le fait d'amener la bobine d'induction (2), à chauffer, en utilisant l'énergie électromagnétique externe reçue par la bobine d'induction (2), la batterie rechargeable sans fil (81) dans laquelle la bobine d'induction (2) est située ; et
lorsqu'une troisième température obtenue par le capteur de température (82) n'est pas inférieure au deuxième seuil de température, l'introduction, dans la batterie rechargeable sans fil (81), de la force électromotrice induite qui est générée par la bobine d'induction (2) sur la base de l'énergie électromagnétique externe reçue, pour charger la batterie rechargeable sans fil (81).
